# EUROPEAN PATENT APPLICATION

(11) **EP 1 574 235 A1**
(43) Date of publication of application: **14.09.2005**
(21) Application number: 04022297.8
(22) Date of filing: 20.09.2004
(51) Int. Cl.: A63B 55/08, B62B 3/02, B62B 3/18

(54) **Detachable container for golf trolley**

(30) Priority: 11.03.2004 US 799272
(71) Applicant: Chang, Jungchuan Leo, Fountain Valley, CA 92708 (US)
(72) Inventor: Chang, Jungchuan Leo, Fountain Valley, CA 92708 (US)
(74) Representative: Casalonga, Axel

(57) **Abstract**

A detachable container, which is adapted for holding on a golf trolley having two inclination arms (1) extending downwardly and outwardly, includes a container frame (30) having a storing chamber, and two container holders spacedly mounted on a rear side of the container frame (30) to define a holding length between the container holders, wherein the holding length is larger than an upper span between two upper ends of the inclination arms (1) and is smaller than a lower span between two lower ends of the inclination arms, (1) such that the container holders are adapted for self-adjustably holding along the two inclination arms (1) respectively at a position that the holding length matches with a transverse distance between the two inclination arms (1) so as to substantially hold the detachable container at the golf trolley.

## Description

### Background of the Present Invention

### Field of Invention

The present invention relates to a golf trolley, and more particularly to a detachable container for a golf trolley, wherein the detachable container, which is embodied as a universal container, comprises two spaced apart container holders for fittingly holding at two inclination arms of the golf trolley respectively by a holding length between the container holders.

### Description of Related Arts

A golf trolley is considered as one of the convenient traveling tools to assist golfers to carry the golf bag on the golf course. A conventional golf trolley generally comprises a supporting frame for holding the golf bag thereon and two wheel assemblies mounted to the supporting frame, wherein two inclination arms are inclinedly extended from the supporting frame to the wheel assemblies respectively, such that the golfer is able to carry the golf bay by pulling the golf trolley from courses to courses.

For convenience purpose, the golf trolley further incorporates with a folding arrangement to fold up the gold trolley in a compact unit wherein hundreds different types of such foldable golf trolley are known in the prior art.

The problem is that most golfers have to carry plenty of golf accessories, such as golf balls, golf tees, golf shoes and golf gloves. Generally speaking, most of the golf bags provide an accessory pocket to store such golf accessories. However, it is a hassle for the golfer to detach the golf bag from the golf trolley in order to take the golf accessories from the accessory pocket during golfing. In addition, caps, towels, umbrellas, food and beverages are common items that the golfers usually carry while enjoying the golf activities.

In order to reduce the personal load, the golfer may merely put all the golf items into a shopping bag to hang on the supporting frame of the golf trolley. However, it is danger because the golf trolley is designed as a transportation tool but not a storage trolley. Therefore, the weight hanged on the supporting frame may render the golf trolley losing its balance and turning over.

To eliminate the foresaid drawback, the golf trolley further comprises a storage container such that the golf items can be put in the storage container conveniently during golfing. However, the problem is that where the storage container should be placed. Accordingly, each golf trolley has its own size and wheel distance such that the location of the storage container is one of the major problems for incorporating with the golf trolley.

When the storage container is mounted at the supporting frame of the golf trolley, the folding structure of the golf trolley will be complicated since the storage container will block the folding operation of the golf trolley. It is unreasonable that the storage container should be minimized its size to fit the folding operation of the golf trolley.

In addition, most of the golf trolleys comprise an adjustable handle pivotally mounted to supporting frame such that the golfer is able to selectively adjust the handle to fit his or her hand distance. However, when the storage container is mounted at the supporting frame, the pivot movement of the handle will cause an unwanted movement of the storage container so as to lose the balance of the golf trolley. In other words, the folding movement of the golf trolley will substantially change the dimension of the golf trolley through the inclination arms such that the storage container cannot be secured on such foldable golf trolley. In fact, storing such golf accessories becomes an extravagant hope for most golfers during golfmg.

### Summary of the Present Invention

A main object of the present invention is to provide a detachable container for a golf trolley, wherein the detachable container comprises two spaced apart container holders for fittingly holding at two inclination arms of the golf trolley respectively by a holding length between the container holders.

Another object of the present invention is to provide a detachable container for a golf trolley, wherein the detachable container is a universal container for any kind of golf trolley having two inclination arms. In other words, the detachable container is adapted for detachably fitting on all kinds of existing golf trolleys via the two container holders.

Another object of the present invention is to provide a detachable container for a golf trolley, wherein the attaching/detaching operation of the detachable container is easy and convenience by simply dropping down the two container holders along the two inclination arms respectively.

Another object of the present invention is to provide a detachable container for a golf trolley, wherein the weight of the detachable container, especially when golf items are disposed therein, ensures the holding engagement between the container holder and the inclination arm so as to prevent the detachable container detaching from the golf trolley accidentally.

Another object of the present invention is to provide a detachable container for a golf trolley, wherein the detachable container is self-adjusted its position along the inclination arms of by the holding length, such that when the inclination arms are folded to adjust a distance therebetween, the detachable container is still held at the inclination arms so as to prevent the detachable container detaching from the golf trolley accidentally.

Another object of the present invention is to provide a detachable container for a golf trolley, wherein the detachable container is adapted to be folded up into a compact unit after the detachable container is detached from the golf trolley for storage and carriage.

Another object of the present invention is to provide a detachable container for a golf trolley, which does not require altering the original structure of the golf trolley so as to reduce the manufacturing cost of the golf trolley incorporating with the detachable container.

Another object of the present invention is to provide a detachable container for a golf trolley, wherein no expensive or mechanical structure is required to employ in the present invention in order to achieve the above mentioned objects. Therefore, the present invention successfully provides an economic and efficient solution not only for providing a storage space to carry the golf accessories but also for enhancing the practice use of the golf trolley.

Accordingly, in order to accomplish the above objects, the present invention provides a detachable container for a golf trolley having two inclination arms extending downwardly and outwardly, comprising:
a container frame having a storing chamber; and
two container holders spacedly mounted on a rear side of the container frame to define a holding length between the container holders, wherein the holding length is larger than an upper span between two upper ends of the inclination arms and is smaller than a lower span between two lower ends of the inclination arms, such that the container holders are adapted for self-adjustably holding along the two inclination arms respectively at a position that the holding length matches with a transverse distance between the two inclination arms so as to substantially hold the detachable container at the golf trolley.

These and other objectives, features, and advantages of the present invention will become apparent from the following detailed description, the accompanying drawings, and the appended claims.

### Brief Description of the Drawings

Fig. 1 is a perspective view of a golf trolley incorporating with a detachable container according to a first preferred embodiment of the present invention.
Fig. 2 is a rear perspective view of the detachable container held on the inclination arms of the golf trolley according to the above first preferred embodiment of the present invention.
Fig. 3 is a perspective view of the detachable container in a folded position according to the above first preferred embodiment of the present invention.
Fig. 4 is a perspective view of a detachable container according to a second preferred embodiment of the present invention.
Fig. 5 is a rear view of the detachable container held on the golf trolley according to the above second preferred embodiment of the present invention.
Fig. 6 illustrates an alternative mode of the detachable container according to the above second preferred embodiment of the present invention.
Fig. 7 illustrates an alternative mode of the length adjusting unit of the detachable container according to the above second preferred embodiment of the present invention.

### Detailed Description of Illustrative Embodiment

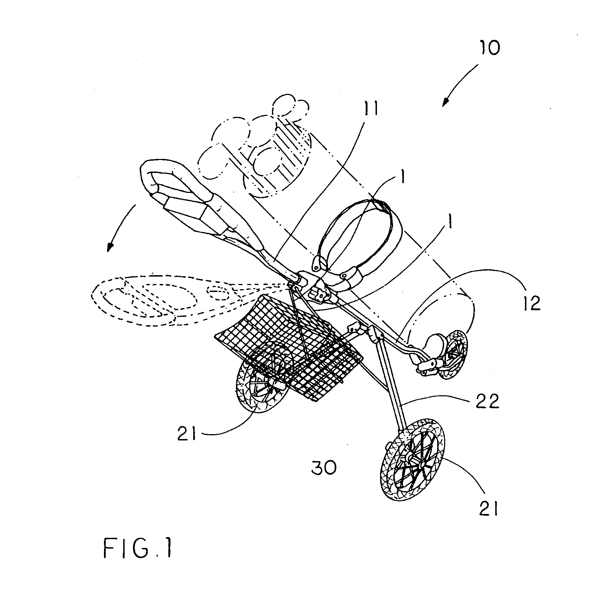

Referring to Fig. 1 of the drawings, a golf trolley incorporated with a detachable container according to a first embodiment of the present invention is illustrated, wherein the detachable container is adapted for detachably holding on the golf trolley having two inclination arms 1.

The golf trolley, which is embodied as a foldable golf trolley, comprises a supporting frame 10 for supporting a golf bag thereon and two wheel assemblies 20. The supporting frame comprises an upper handle frame 11 and a lower supporting stand 12 pivotally connected to the handle frame 11. Each of the wheel assemblies 20 comprises a side wheel 21 and a wheel arm 22 pivotally extended from the supporting frame 10 to rotatably connect with the side wheel 21. As shown in Fig. 1, the two inclination arms 1 are downwardly and outwardly extended from the handle frame 11 of the supporting frame 10 to the wheel arms 22 of the wheel assemblies 20 respectively in such a manner that when the handle frame 11 is downwardly folded to overlap with the supporting stand 12, the two wheel arms 22 are driven to fold inwardly to reduce a distance between the two side wheels 21 so as to fold up the golf trolley.

It is worth to mention that the two inclination arms 1 can be incorporated with any kind of existing golf trolley wherein the inclination arms 1 are downwardly and outwardly extended from the supporting frame 10 to the two wheel arms 22 as two rigid supporters to enhance the stiffness of the golf trolley.

The detachable container comprises a container frame 30 having a storing chamber 301, and two container holders 40 spacedly mounted on a rear side of the container frame 30 to define a holding length D between the container holders 40, wherein the holding length D is larger than an upper span between two upper ends of the inclination arms 1 and is smaller than a lower span between two lower ends of the inclination arms 1, such that the container holders 40 are adapted for self-adjustably holding along the two inclination arms 1 respectively at a position that the holding length D matches with a transverse distance between the two inclination arms 1 so as to substantially hold the detachable container at the golf trolley.

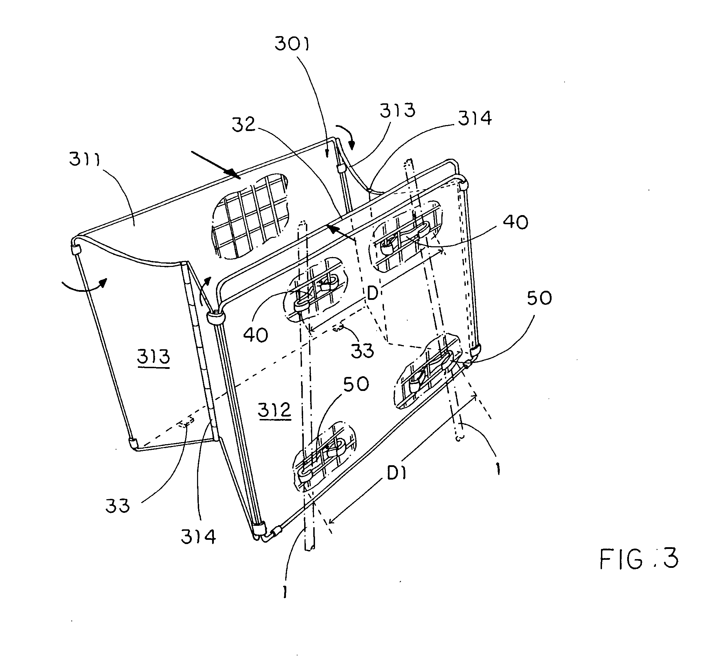

As shown in Figs. 1 and 3, the container frame 30, which is embodied as a foldable container frame, comprises a plurality of boundary walls 31 pivotally connected with each other edges to edges, a base wall 32 pivotally connected to one of the boundary walls 31 edge to edge, and at least a retention stopper 33 provided at a bottom edge of the corresponding boundary wall 31 in such a manner that when the base wall 32 is pivotally and downwardly folded within the boundary walls 31 and is stopped by the retention stopper 33, the storing chamber 301 having a top opening 302 is substantially formed within the boundary walls 31 and the base wall 32.

The boundary walls 31 are embodied as a front wall 311, a back wall 312, and two sidewalls 313 pivotally connected with each other edges to edges, wherein two pivot joints 314 are formed at mid-portions of the two sidewalls 313 respectively such that each of the sidewalls 313 is adapted to overlappedly fold in half, as shown in Fig. 3, so as to further reduce the size of the container frame 30 when the container frame 30 is folded up. It is worth to mention that the two pivot joints 314 allow the sidewalls 313 to be pivotally and inwardly folded to overlap with each other so as to prevent the sidewalls 313 from outwardly folding in an overlapped manner.

The boundary walls 31 are inclinedly extended from the base wall 32 such that a top opening 302 of the boundary frame 30 is facing in an inclination manner. Therefore, when the boundary frame 30 is held on the golf trolley, the top opening 302 of the boundary frame 30 is facing towards the golfer for easy access.

Accordingly, in order to fold up the container frame 30, the golfer is able to pivotally lift up the base wall 32 within the storage chamber 301 such that the boundary walls 31 are adapted to be overlappedly folded into a compact unit, as shown in Fig. 3.

According to the illustrative embodiment, the two container holders 40 are spacedly mounted on one of the boundary walls 31 of the container frame 30 so as to hold the container frame 30 on the golf trolley. The holding length D is defined between the holding members 41 to match with the transverse distance between the inclination arms 1. Accordingly, the transverse distance is gradually increased from the upper span of the inclination arms 1 to the lower span thereof. Therefore, the container holders 40 fit to hold along the inclination arms 1 once the holding length D matches with the transverse distance between the upper span of the inclination arms 1 and the lower span thereof.

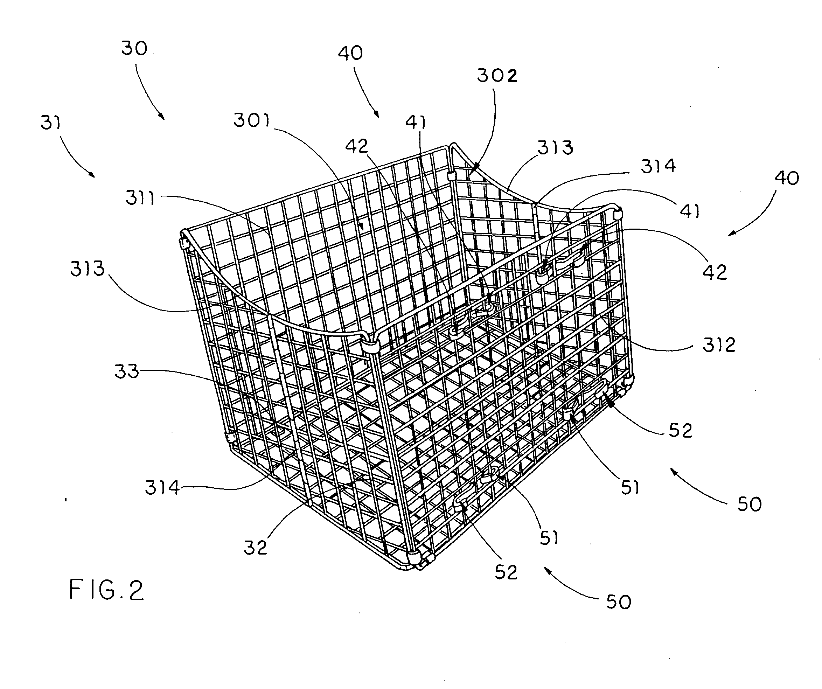

Each of the container holders 40 has a detachable end 41 detachably affixed on the rear side of the container frame 30 and an opposed hooking end 42 adapted for holding at the respective inclination arm 1, wherein the holding length D is defined between the hooking ends 42 of the container holders 40 such that the two container holders 40 are adapted for holding at the two inclination arms 1 from two outer sides thereof once the holding distance D between the two container holders 40 matches with the transverse distance between the inclination arms 1, as shown in Fig. 2.

Accordingly, each of the container holders 40 is detachably fastened at the rear side of the container frame 30 such that the holding length D can be selectively adjusted to fit the transverse distance between the two inclination arms 1 so as to adjust the position of the detachable container with respect to the golf trolley.

The detachable container further comprises two supplemental container holders 50 spacedly mounted on the rear side of the container frame 30 to define a supplemental holding length D1 between the supplemental container holders 50, wherein the supplemental holding length D1 is larger than the holding length D of the container holders 40 and is smaller than the lower span of the inclination arms 1, such that the supplemental container holders 50 are adapted for self-adjustably holding along the two inclination arms 1 respectively at a position that the supplemental holding length D1 matches with the transverse distance between the two inclination arms 1 so as to substantially hold the detachable container at the golf trolley. In other words, the container holders 40 and the supplemental container holders 50 provide four holding points at the inclination arms 1 to ensure the container frame 30 being securely held on the golf trolley.

Accordingly, each of the supplemental container holders 50, which has the same structure of the container holder 40, has a supplemental detachable end 51 detachably affixed on the rear side of the container frame 30 and an opposed supplemental hooking end 52 adapted for holding at the respective inclination arm 1, wherein the supplemental holding length D1 is defined between the supplemental hooking ends 52 of the supplemental container holders 50 such that the two supplemental container holders 50 are adapted for holding at the two inclination arms 1 from two outer sides thereof once the supplemental holding distance D1 between the two supplemental container holders 50 matches with the transverse distance between the inclination arms 1.

In order to hold the detachable container on the golf trolley, the golfer is able to dispose the container holders 40 at the upper span of the inclination arms 1 and drop down the container frame 30 along the inclination arms 1. Therefore, once the holding length D of the container holders 40 matches with the transverse distance between the inclination arms 1, the inclination arms 1 are fittingly held by the container holder 40 respectively to securely hold the container frame 30 at the inclination arms 1 so as to hold the detachable container on the golf trolley.

It is worth to mention that the detachable container of the present invention is able to incorporate with any kind of golf trolley having two inclination arms 1 because the holding operation of the detachable container is to match the holding distance D between the two container holders 40 with the transverse distance between the inclination arms 1.

In addition, for the foldable golf trolley, as shown in Fig. 1, the folding operation of the golf trolley will drive the inclination arms 1 to adjust the transverse distance therebetween, the two container holders 40 are self-adjusted to match the holding distance D with the transverse distance between the moving inclination arms 1. Therefore, the moving part of the golf trolley does not affect the secure holding configuration of the detachable container so as to prevent the detachable container detaching from the golf trolley during folding operation.

Thus, the golf trolley can be folded up into a compact unit since the detachable container is adapted to be detached from the golf trolley such that the golf trolley does not require altering its original structure to incorporate with the detachable container. Once the detachable container is detached from the golf trolley, the detachable container is adapted to be folded up into a compact unit, as shown in Fig. 3, for transportation and storage.

It is worth to mention that when the detachable container of the present invention is held on the golf trolley, the weight of the container frame 30, especially when the golf items are disposed therein, will ensure the holding engagement between the container holder 40 and the inclination arm 1 so as to prevent the detachable container detaching from the golf trolley accidentally. It is because the downward movement of the container frame 30 is limited by the holding distance D with respect to the transverse distance between the inclination arms 1. Furthermore, the golfer must lift up the container frame 30 along the inclination arms 1 in order to detach the detachable container from the golf trolley. Therefore, the weight of the container frame 30 ensures the detachable container to be secured on the golf trolley.

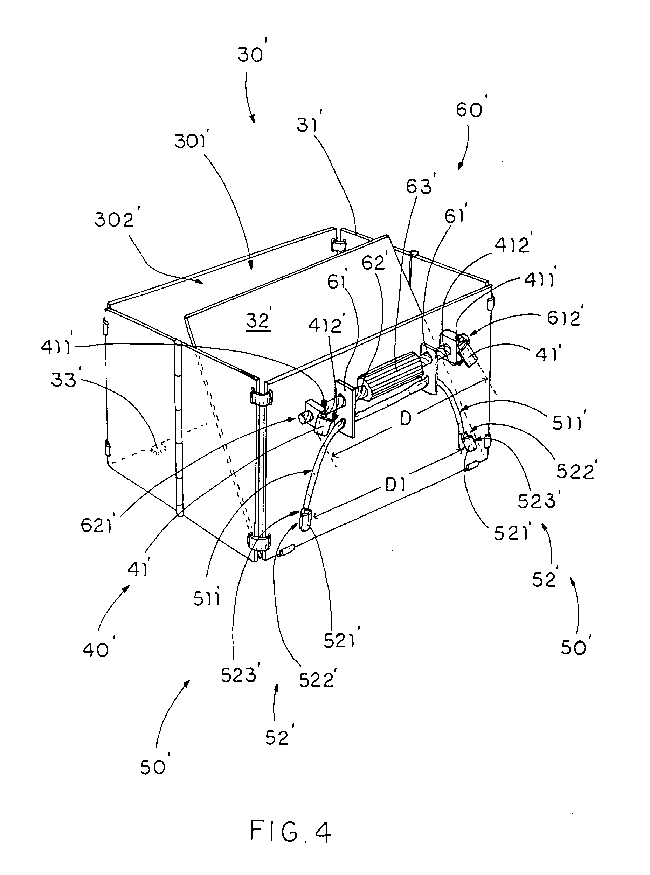

Referring to Fig. 4, a detachable container according to a second embodiment of the present invention is illustrated, wherein the detachable container comprises a container frame 30' having a storing chamber 301', and two container holders 40' spacedly mounted on a rear side of the container frame 30' to define a holding length D between the container holders 40', wherein the holding length D is larger than an upper span between two upper ends of the inclination arms 1 and is smaller than a lower span between two lower ends of the inclination arms 1, such that the container holders 40' are adapted for self-adjustably holding along the two inclination arms 1 respectively at a position that the holding length D matches with a transverse distance between the two inclination arms 1 so as to substantially hold the detachable container at the golf trolley.

Each of the container holders 40' comprises a holding member 41', having a U-shaped cross section, provided on an upper portion of the rear side of the container frame 30', wherein each of the holding members 41' has a holding groove 411' and a side opening 412' for receiving the respective inclination arm 1 within the holding groove 411', such that the two holding members 41' of the container holders 40' are held at the two inclination arms 1 from two outer sides thereof.

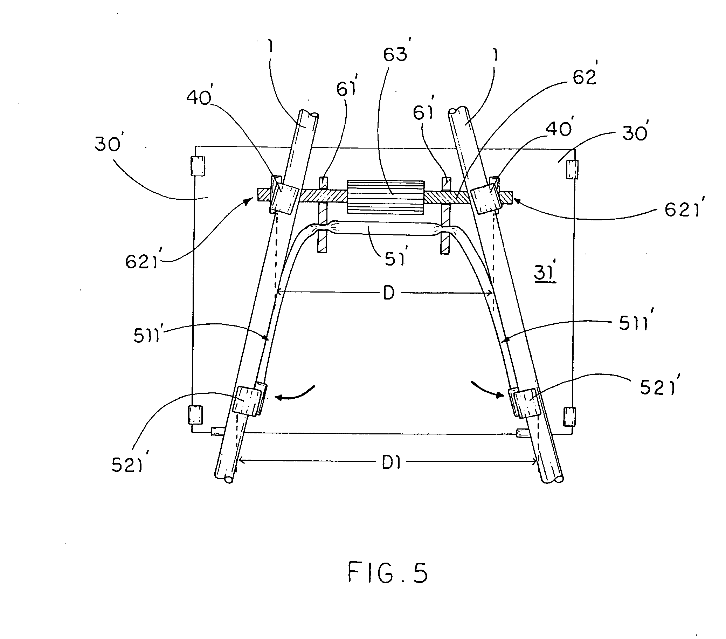

As shown in Fig. 5, each of the holding grooves 411' is downwardly and outwardly extended for matching an inclination angle of the respective inclination arm 1 such that when the holding members 41' are slid along the inclination arms 1 respectively, the inclination arms 1 are fittingly received in the holding grooves 411' respectively so as to securely hold the container frame 30' on the golf trolley.

Accordingly, the container frame 30' comprises a plurality of boundary walls 31' pivotally connected with each other edges to edges, a base wall 32' pivotally connected to one of the boundary walls 31' edge to edge, and at least a retention stopper 33' provided at a bottom edge of the corresponding boundary wall 31' in such a manner that when the base wall 32' is pivotally and downwardly folded within the boundary walls 31' and is stopped by the retention stopper 33', the storing chamber 301' having a top opening 302' is substantially formed within the boundary walls 31' and the base wall 32'.

It is worth to mention that the container frame 30' can be constructed as the container frame 30 of the first embodiment that boundary walls 31 are inclinedly extended from the base wall 32 such that the top opening 302 of the boundary frame 30 is facing in an inclination manner, as shown in Fig. 1. Alternatively, the container frame 30' can be a simple container that the top opening 302' is facing upwardly.

According to the second embodiment, the present invention further comprises a length adjusting unit 60' which comprises two shaft holders 61' spacedly mounted on the rear side of the container frame 30' and a control shaft 62' rotatably mounted to the shaft holder 61' to longitudinally supported on the rear side of the container frame 30' wherein the control shaft 62' has two threaded end portions 621' rotatably mounted to the container holders 40' respectively, such that when the control shaft 62' is rotated, the two container holders 40' are driven to slide along the threaded end portions 621' of the control shaft 62' so as to selectively adjust the holding distance D between the container holders 40'.

The length adjusting unit 60' further comprises a control handle 63' coaxially mounted on the control shaft 63, preferably between the shaft holders 61', such that the golfer is able to rotate the control shaft 62' so as to control the holding distance D between the container holders 40'. It is worth to mention that the golfer is able to adjust the position of the detachable container of the present invention along the inclination arms 1 such that the golfer is able to hold the detachable container on the golf trolley towards the upper span of the inclination arms 1 by reducing the holding distance D between the container holders 40'. Likewise, the golfer is able to hold the detachable container on the golf trolley towards the lower span of the inclination arms 1 by increasing the holding distance D between the container holders 40'.

The detachable container further comprises a retention holder unit 50' which comprises a resilient arm 51' substantially mounted at the shaft holders 61' to downwardly suspend two resilient end portions 511' and two retention holders 52' mounted at the resilient end portions 511' of the resilient arm 51' respectively wherein the resilient end portions 511' of the resilient arm 51' are adapted for providing two outward pushing forces against the inclination arms 1 when the retention holders 52' are held at inner sides of the inclination arms 1 respectively so as to securely hold the container frame 30' on the golf trolley.

As shown in Fig. 4, the resilient arm 51' is embodied as an elastic wire having a mid-portion substantially mounted at the shaft holders 61' such that the two resilient end portions 511' of the resilient arm 51' are downwardly extended in a suspending manner.

The two retention holders 52' spacedly supported on the rear side of the container frame 30' via said resilient arm 51' to define a supplemental holding length D1 between the retention holders 52', wherein the supplemental holding length D1 is larger than the holding length D of the container holders 40' and is larger than the transverse distance of the inclination arms 1, such that the resilient arm 51' provides the outward pushing force at the retention holders 52' for substantially biasing against the two inclination arms 1 respectively when the supplemental holding length D1 matches with the transverse distance between the two inclination arms 1 so as to substantially hold the detachable container at the golf trolley. In other words, the container holders 40' and the retention holders 52' provide four holding points at the inclination arms 1 to ensure the container frame 30' being securely held on the golf trolley.

Each of the retention holders 52', which has the same structure of the container holder 40', comprises a supplemental holding member 521', having a U-shaped cross section, provided on a lower portion of the rear side of the container frame 30, wherein each of the supplemental holding members 521' has a supplemental holding groove 522' and a supplemental side opening 513' for receiving the respective inclination arm 1 within the supplemental holding groove 522', such that the two supplemental holding members 521' of the retention holders 52' are held at the two inclination arms 1 from two inner sides thereof respectively.

Accordingly, the golfer is able to dispose the container holders 40' at the upper span of the inclination arms 1 and drop down the container frame 30' along the inclination arms 1. Therefore, once the holding length D of the container holders 40' matches with the transverse distance between the inclination arms 1, the inclination arms 1 are fittingly held by the container holder 40' respectively to securely hold the container frame 30' at the inclination arms 1 so as to hold the detachable container on the golf trolley.

Then, the golfer is able to push the two retention holders 52' towards each other via the resilient arm 51'. Once the supplemental holding distance D1 matches the transverse distance between the inclination arms 1, the retention holders 52' are allowed to hold along the inclination arms 1. Due to the elasticity of the resilient arm 51', the retention holders 52' are substantially held at the two inclination arms 1 from two inner sides thereof respectively, as shown in Fig. 5.

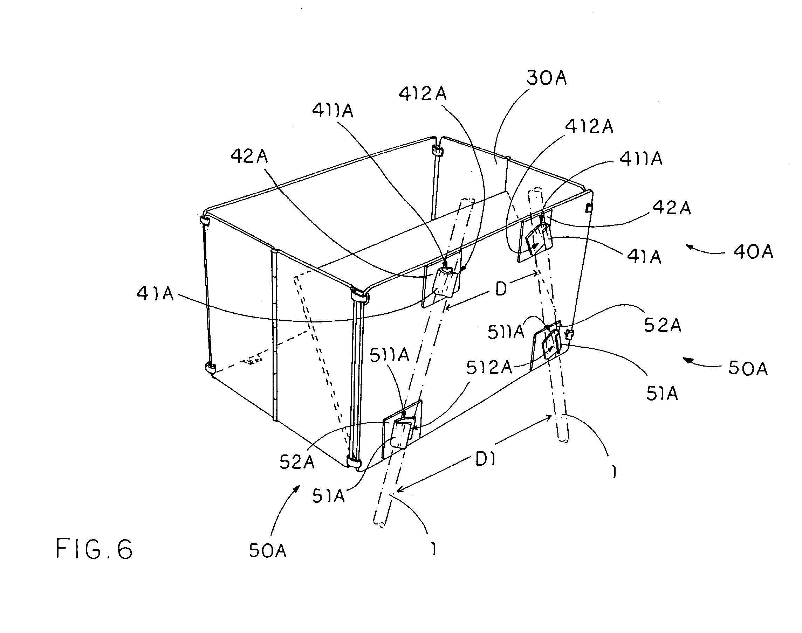

Fig. 6 illustrates an alternative mode of the container holder 40A of the second embodiment of the present invention, wherein the container holders 40A and the retention holders 52' are substantially affixed on the rear side of the container frame 30A to hold along the inclination arms 1.

The two container holders 40A are spacedly mounted on a rear side of the container frame 30A to define the holding length D between the container holders 40A, such that the container holders 40A are adapted for self-adjustably holding along the two inclination arms 1 respectively at a position that the holding length D matches with a transverse distance between the two inclination arms 1 so as to substantially hold the detachable container at the golf trolley.

Each of the container holders 40A comprises a holding member 41A, having a U-shaped cross section, provided on an upper portion of the rear side of the container frame 30', wherein each of the holding members 41A has a holding groove 411A and a side opening 412A for receiving the respective inclination arm 1 within the holding groove 411A, such that the two holding members 41A of the container holders 40A are held at the two inclination arms 1 from two outer sides thereof.

As shown in Fig. 6, each of the holding grooves 411A is downwardly and outwardly extended for matching an inclination angle of the respective inclination arm 1 such that when the holding members 41A are slid along the inclination arms 1 respectively, the inclination arms 1 are fittingly received in the holding grooves 411A respectively so as to securely hold the container frame 30A on the golf trolley.

In order to hold each of the holding member 41A at an inclined position, each of the container holders 40A further comprises a retention base 42A substantially mounted on the upper portion of the rear side of the container frame 30A such that the respective holding member 41A is inclinedly mounted on the retention base 42A to retain the respective holding groove 411A in an inclination manner.

As shown in Fig. 6, the detachable container further comprises two supplemental container holders 50A, which are embodied as the retention holders 52', spacedly mounted on the rear side of the container frame 30A to define a supplemental holding length D1 between the supplemental container holders 50A, wherein the supplemental holding length D1 is larger than the holding length D of the container holders 40A and is smaller than the lower span of the inclination arms 1, such that the supplemental container holders 50A are adapted for self-adjustably holding along the two inclination arms 1 respectively at a position that the supplemental holding length D1 matches with the transverse distance between the two inclination arms 1 so as to substantially hold the detachable container at the golf trolley. In other words, the container holders 40A and the supplemental container holders 50A provide four holding points at the inclination arms 1 to ensure the container frame 30A being securely held on the golf trolley.

Accordingly, each of the supplemental container holders 50A, which has the same structure of the container holder 40A, comprises a supplemental holding member 51A, having a U-shaped cross section, provided on a lower portion of the rear side of the container frame 30A, wherein each of the supplemental holding members 51A has a supplemental holding groove 511A and a supplemental side opening 512A for receiving the respective inclination arm 1 within the supplemental holding groove 511A, such that the two supplemental holding members 51A of the supplemental container holders 50A are held at the two inclination arms 1 from two outer sides thereof.

As shown in Fig. 6, each of the supplemental holding grooves 511A is downwardly and outwardly extended for matching an inclination angle of the respective inclination arm 1 such that when the supplemental holding members 51A are slid along the inclination arms 1 respectively, the inclination arms 1 are fittingly received in the supplemental holding grooves 511A respectively so as to securely hold the container frame 30A on the golf trolley. In other words, the holding groove 411A is aligned with the supplemental holding groove 511A with the inclination angle of the respective inclination arm 1.

In order to hold each of the supplemental holding member 51A at an inclined position, each of the supplemental container holders 50A further comprises a supplemental retention base 52A substantially mounted on the lower portion of the rear side of the container frame 30A such that the respective supplemental holding member 51A is inclinedly mounted on the supplemental retention base 52A to retain the respective supplemental holding groove 511A in an inclination manner.

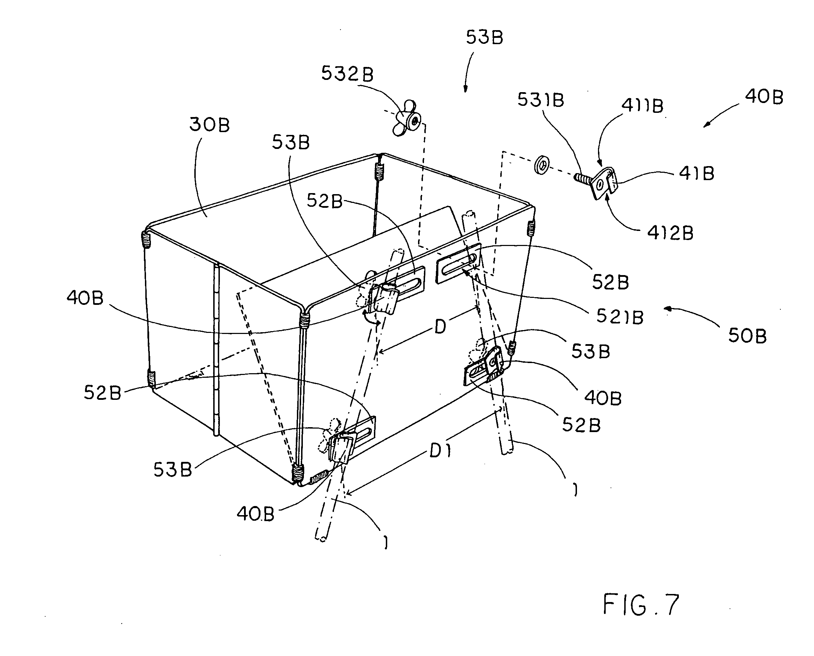

Fig. 7 illustrates an alternative mode of the length adjusting unit 60B which comprises two retention bases 52B, each having a longitudinal slot 521B, spacedly mounted on the rear side of the container frame 30B and two fastening units 53B securely mounted the container holders 40B to the retention bases 52B to adjustably slide the container holders 40B along the longitudinal slots 521B respectively, so as to selectively adjust the holding length D between the container holders 40B.

Each of the container holders 40B comprises a holding member 41B, having a U-shaped cross section, provided on an upper portion of the rear side of the container frame 30B, wherein each of the holding members 41B has a holding groove 411B and a side opening 412B for receiving the respective inclination arm 1 within the holding groove 411B, such that the two holding members 41B of the container holders 40B are held at the two inclination arms 1 from two outer sides thereof.

As shown in Fig. 7, each of the fastening units 53B comprises a slider shaft 531B frontwardly extended from the holding member 41B of the respective container holder 40B to slidably pass through the longitudinal slot 521B of the respective retention base 52B and a shaft fastener 532B detachably fastened with the slider shaft 53B to securely lock up the container holder 40B at the respective retention base 52B so as to retain the container holder 40B on the container frame 30B in position.

Accordingly, each of the shaft fasteners 532B is a hand screw adapted for providing a quick and easy attachment to fasten with the slider shaft 53B so as to adjust the holding length D between the container holders 40B.

In addition, an inclination of each of the container holders 40B is allowed to be adjusted via the slider shaft 531B so as to adjust the inclined position of the container holder 40B for matching an inclination angle of the respective inclination arm 1. Therefore, when the holding members 41B are slid along the inclination arms 1 respectively, the inclination arms 1 are fittingly received in the holding grooves 411B respectively so as to securely hold the container frame 30B on the golf trolley.

As shown in Fig. 7, a second pair of the container holders 40B, which are embodied as the supplemental container holders, are formed on the lower portion of the rear side of the container frame 30B to define a supplement holding length D1 so as to substantially hold the detachable container at the golf trolley. In other words, the four container holders 40B provide four holding points at the inclination arms 1 to ensure the container frame 30B being securely held on the golf trolley.

Therefore, the golfer is able to lock up the container holders 40B on the container frame 30B in position to fittingly hold the detachable container on the golf trolley. Once the golfer wants to hold the detachable container on another golf trolley, he or she is able to easily adjust the holding length D between the container holders 40B to fit the transverse distance between the inclination arms 1.

One skilled in the art will understand that the embodiment of the present invention as shown in the drawings and described above is exemplary only and not intended to be limiting.

It will thus be seen that the objects of the present invention have been fully and effectively accomplished. It embodiments have been shown and described for the purposes of illustrating the functional and structural principles of the present invention and is subject to change without departure from such principles. Therefore, this invention includes all modifications encompassed within the spirit and scope of the following claims.

## Claims

**1.** A detachable container for a golf trolley having two inclination arms downwardly and outwardly extending, **characterized by** comprising:
a container frame having a storing chamber; and
two container holders spacedly mounted on a rear side of said container frame to define a holding length between said container holders, wherein said holding length is larger than an upper span between two upper ends of said inclination arms and is smaller than a lower span between two lower ends of said inclination arms, such that said container holders are adapted for self-adjustably holding along said two inclination arms respectively at a position that said holding length matches with a transverse distance between said two inclination arms so as to substantially hold said detachable container at said golf trolley.

**2.** The detachable container, as recited in claim 1, wherein each of said container holders has a hooking end extended from said rear side of said container frame for holding at said respective inclination arm, wherein said holding length is defined between said hooking ends of said container holders such that said two container holders are adapted for holding at said two inclination arms from two outer sides thereof once said holding distance between said two container holders matches with said transverse distance between said inclination arms.

**3.** The detachable container, as recited in claim 2, wherein each of said container holders further has a detachable end detachable affixed on said rear side of said container frame to selectively adjust said holding length between said two hooking ends of said container holders with respect to said transverse distance between said inclination arms.

**4.** The detachable container, as recited in claim 3, further comprising two supplement container holders provided on said rear side of said container frame to define a supplemental holding length between said two supplement container holders for holding along said inclination arms respectively, wherein said supplemental holding length is larger than said holding length of said container holders and is smaller than said lower span of said inclination arms, such that said supplemental container holders are adapted for self-adjustably holding along said two inclination arms respectively at a position that said supplemental holding length matches with said transverse distance between said two inclination arms.

**5.** The detachable container, as recited in claim 1, wherein each of said container holders comprises a holding member, having a U-shaped cross section, provided on said rear side of said container frame, wherein each of said holding members has a holding groove and a side opening for receiving said respective inclination arm within said holding groove, such that said two holding members of said container holders are adapted for holding at said two inclination arms from two outer sides thereof.

**6.** The detachable container, as recited in claim 5, wherein each of said holding grooves is downwardly and outwardly extended for matching an inclination angle of said respective inclination arm such that when said holding members are slid along said inclination arms respectively, said holding members are adapted for fittingly holding along said inclination arms in said holding grooves respectively so as to securely hold said container frame on said golf trolley.

**7.** The detachable container, as recited in claim 6, further comprising a length adjusting unit which comprises two shaft holders spacedly mounted on said rear side of said container frame and a control shaft rotatably mounted to said shaft holder to longitudinally supported on said rear side of said container frame, wherein said control shaft has two threaded end portions rotatably mounted to said container holders respectively, such that when said control shaft is rotated, said two container holders are driven to slide along said threaded end portions of said control shaft so as to selectively adjust said holding distance between the container holders.

**8.** The detachable container, as recited in claim 7, further comprising a retention holder unit which comprises a resilient arm substantially mounted at said shaft holders to downwardly suspend two resilient end portions and two retention holders mounted at said resilient end portions of said resilient arm respectively, wherein said resilient end portions of said resilient arm are adapted for providing two outward pushing forces against said inclination arms when said retention holders are held at inner sides of said inclination arms respectively so as to securely hold said container frame on said golf trolley.

**9.** The detachable container, as recited in claim 8, wherein said two retention holders spacedly supported on said rear side of said container frame via said resilient arm to define a supplemental holding length between said retention holders, wherein said supplemental holding length is larger than said holding length of said container holders and is larger than said transverse distance of said inclination arms, such that said resilient arm provides said outward pushing force at said retention holders for substantially biasing against said two inclination arms respectively when said supplemental holding length matches with said transverse distance between said two inclination arms.

**10.** The detachable container, as recited in claim 5, further comprising two supplement container holders provided on said rear side of said container frame to define a supplemental holding length between said two supplement container holders for holding along said inclination arms respectively, wherein said supplemental holding length is larger than said holding length of said container holders and is smaller than said lower span of said inclination arms, such that said supplemental container holders are adapted for self-adjustably holding along said two inclination arms respectively at a position that said supplemental holding length matches with said transverse distance between said two inclination arms.

**11.** The detachable container, as recited in claim 5, further comprising a length adjusting unit which comprises two retention bases, each having a longitudinal slot, spacedly mounted on said rear side of said container frame and two fastening units securely mounted said container holders to said retention bases to adjustably slide said container holders along said longitudinal slots respectively, so as to selectively adjust said holding length between said container holders.

**12.** The detachable container, as recited in claim 11, wherein each of said fastening units comprises a slider shaft frontwardly extended from said holding member of said respective container holder to slidably pass through said longitudinal slot of said respective retention base and a shaft fastener detachably fastened with said slider shaft to securely lock up said container holder at said respective retention base so as to retain said container holder on said container frame in position.

**13.** A detachably foldable container for a golf trolley having two inclination arms downwardly and outwardly extending, **characterized by** comprising:
a container frame comprises a plurality of boundary walls pivotally connected with each other edges to edges, a base wall pivotally connected to one of said boundary walls edge to edge, and at least a retention stopper provided at a bottom edge of said corresponding boundary wall in such a manner that when said base wall is pivotally and downwardly folded within said boundary walls and is stopped by said retention stopper, a storing chamber having a top opening is substantially formed within said boundary walls and said base wall; and
two container holders spacedly mounted on a rear side of said container frame to define a holding length between said container holders, wherein said holding length is larger than an upper span between two upper ends of said inclination arms and is smaller than a lower span between two lower ends of said inclination arms, such that said container holders are adapted for self-adjustably holding along said two inclination arms respectively at a position that said holding length matches with a transverse distance between said two inclination arms so as to substantially hold said detachable container at said golf trolley.

**14.** The detachably foldable container, as recited in claim 13, wherein said boundary walls are inclinedly extended from said base wall such that said top opening of said boundary frame is facing in an inclination manner when said container frame is held on said golf trolley.

**15.** The detachably foldable container, as recited in claim 14, further comprising two supplement container holders provided on said rear side of said container frame to define a supplemental holding length between said two supplement container holders for holding along said inclination arms respectively, wherein said supplemental holding length is larger than said holding length of said container holders and is smaller than said lower span of said inclination arms, such that said supplemental container holders are adapted for self-adjustably holding along said two inclination arms respectively at a position that said supplemental holding length matches with said transverse distance between said two inclination arms.

**16.** The detachably foldable container, as recited in claim 13, further comprising a length adjusting unit which comprises two shaft holders spacedly mounted on said rear side of said container frame and a control shaft rotatably mounted to said shaft holder to longitudinally supported on said rear side of said container frame, wherein said control shaft has two threaded end portions rotatably mounted to said container holders respectively, such that when said control shaft is rotated, said two container holders are driven to slide along said threaded end portions of said control shaft so as to selectively adjust said holding distance between the container holders.

**17.** The detachably foldable container, as recited in claim 16, further comprising a retention holder unit which comprises a resilient arm substantially mounted at said shaft holders to downwardly suspend two resilient end portions and two retention holders mounted at said resilient end portions of said resilient arm respectively, wherein said resilient end portions of said resilient arm are adapted for providing two outward pushing forces against said inclination arms when said retention holders are held at inner sides of said inclination arms respectively so as to securely hold said container frame on said golf trolley.

**18.** The detachably foldable container, as recited in claim 17, wherein said two retention holders spacedly supported on said rear side of said container frame via said resilient arm to define a supplemental holding length between said retention holders, wherein said supplemental holding length is larger than said holding length of said container holders and is larger than said transverse distance of said inclination arms, such that said resilient arm provides said outward pushing force at said retention holders for substantially biasing against said two inclination arms respectively when said supplemental holding length matches with said transverse distance between said two inclination arms.

**20.** The detachably foldable container, as recited in claim 13, wherein each of said container holders comprises a holding member, having a U-shaped cross section, provided on said rear side of said container frame, wherein each of said holding members has a holding groove and a side opening for receiving said respective inclination arm within said holding groove, such that said two holding members of said container holders are adapted for holding at said two inclination arms from two outer sides thereof.

**21.** The detachably foldable container, as recited in claim 13, wherein each of said container holders has a hooking end extended from said rear side of said container frame for holding at said respective inclination arm, wherein said holding length is defined between said hooking ends of said container holders such that said two container holders are adapted for holding at said two inclination arms from two outer sides thereof once said holding distance between said two container holders matches with said transverse distance between said inclination arms.
